(19) Europäisches Patentamt
European Patent Office
Office européen des brevets

(11) **EP 4 202 799 A1**

(12) **EUROPEAN PATENT APPLICATION**
published in accordance with Art. 153(4) EPC

(43) Date of publication:
**28.06.2023 Bulletin 2023/26**

(21) Application number: **20951320.9**

(22) Date of filing: **24.08.2020**

(51) International Patent Classification (IPC):
**G06N 20/00** (2019.01)

(52) Cooperative Patent Classification (CPC):
**G06N 20/00**

(86) International application number:
**PCT/JP2020/031769**

(87) International publication number:
**WO 2022/044064 (03.03.2022 Gazette 2022/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: FUJITSU LIMITED
**Kawasaki-shi, Kanagawa 211-8588 (JP)**

(72) Inventors:
• KOBAYASHI, Kenji
**Kawasaki-shi, Kanagawa 211-8588 (JP)**
• MOHRI, Takao
**Kawasaki-shi, Kanagawa 211-8588 (JP)**
• NAKAO, Yuri
**Kawasaki-shi, Kanagawa 211-8588 (JP)**

(74) Representative: Hoffmann Eitle
**Patent- und Rechtsanwälte PartmbB**
**Arabellastraße 30**
**81925 München (DE)**

(54) **MACHINE LEARNING DATA GENERATION PROGRAM, MACHINE LEARNING DATA GENERATION METHOD, MACHINE LEARNING DATA GENERATION DEVICE, CLASSIFICATION DATA GENERATION PROGRAM, CLASSIFICATION DATA GENERATION METHOD, AND CLASSIFICATION DATA GENERATION DEVICE**

(57) A computer program acquires sets of data each of which is labeled as favorable or unfavorable, calculates a ratio of the number of sets of favorable data and the number of sets of unfavorable data with respect to each of a plurality of types of combinations of first attributes and second attributes that are associated with the sets of data, respectively, when a difference in the ratio that is calculated with respect to each of the types is at or above a threshold, with respect to each combination of a first type contained in the types and each of all other types, specifies candidate data to be changed from among the sets of data with which the first attribute and the second attribute corresponding to the first type are associated, selects first data from among the sets of data with which the first attribute and the second attribute corresponding to the first type are associated, and generates training data.

FIG.11

```
START
        │
        ▼           S1
  ACQUIRE DATA
        │           S2
  PERFORM GROUPING
        │           S3
  HAVE TRIAL OF CORRECTION
  PROCESSING ON EACH PAIR OF GROUPS
        │           S4
  AGGREGATE RESULTS OF TRIALS OF
  CORRECTION PROCESSING WITH
  RESPECT TO EACH GROUP
        │           S5
  CALCULATE EXCESSES
        │
        ▼           S6
  SPECIFY GROUP TO BE CORRECTED
        │           S7
  SELECT INSTANCE TO BE MODIFIED
        │           S8
  MODIFY INSTANCE
        │           S9
  IS EXCESS WITHIN RANGE     NO
  OF ALLOWANCE?
        │ YES
        ▼
       END
```

EP 4 202 799 A1

**Description**

Technical Field

The present disclosure relates to a technique of generating training data for machine learning.

Background Art

Machine learning has been used for decision-making on individuals for entrance examinations, employment, credit, etc.,; however, the cases in which attributes (protected attributes) on which no discrimination is supposed to be made have an effect on the result of prediction have occurred.

In recent years, in consideration of potential social problems, such as discrimination, a technique of modifying an instance (known data) using a trained classifier, and the like, have been used as techniques of making corrections to eliminate biases from the result of prediction. For example, after calculating classification scored of instances using the classifier with respect to training data or test data, sorting by label, and changing the labels such that the probability matches between two groups, sorting according to the classification scores makes corrections to instances labeled as highly ambiguous.

Japanese National Publication of International Patent Application No. 2019-519021

Summary of invention

Technical Problem

In the above-described technique, however, when only a certain attribute is focused on, the labels are changed and the instances are corrected to execute correction of fairness, there is a possibility that a bias (unfairness) in another attribute would increase.

For example, when there are a plurality of protected attributes, in the above-described technique, the protected attributes are corrected one by one in order. When one protected attribute is corrected however, because the breakdown of other attributes is not taken into consideration and therefore the discrimination on another protected attributes deteriorates, the result of another protected attribute that is corrected once is changed, and discrimination on the group of combinations of protected attributes is not corrected.

Note that, with respect to groups of combinations of a plurality of protected attributes, making a discrimination correction between selected two groups (a pair) is considered; however, because the content to be corrected is determined by the pair of the selected groups, the eventual correction result obtained by repeating selecting groups is sometimes a local solution. As described above, there is a possibility that, because of the features of part of the groups, a correction contrary to the entire features would be made.

In one aspect, an object is to provide a training data generating program, a training data generation method, and a training data generation device that make it possible to improve fairness of the training data.

Solution to Problem

According to an aspect of an embodiment, a training data generation program that causes a computer to execute a process including acquiring sets of data each of which is labeled as favorable or unfavorable, calculating a ratio of the number of sets of favorable data and the number of sets of unfavorable data with respect to each of a plurality of types of combinations of first attributes and second attributes that are associated with the sets of data, respectively, when a difference in the ratio that is calculated with respect to each of the types is at or above a threshold, with respect to each combination of a first type contained in the types and each of all other types, based on the ratio, specifying candidate data to be changed from among the sets of data with which the first attribute and the second attribute corresponding to the first type are associated, based on the candidate data to be changed that is specified with respect to each of the combinations, selecting first data from among the sets of data with which the first attribute and the second attribute corresponding to the first type are associated, and generating training data by changing a label of the first data contained in the sets of data.

Advantageous Effects of Invention

According to one aspect, it is possible to improve fairness of training data.

Brief Description of Drawings

FIG. 1 is a diagram for describing information processing according to an embodiment.
FIG. 2 is a diagram illustrating an example of functional blocks of an information processing device.
FIG. 3 is a diagram illustrating an example of training data.
FIG. 4 is a diagram illustrating an example of grouping performed by a grouping unit 222.
FIG. 5 is a diagram illustrating an example of correction processing on pairs of groups that is performed by a correction trial unit 223.
FIG. 6 is a diagram illustrating an example of results of aggregation of results of trials of correction processing that is performed by an aggregation unit 224.
FIG. 7 is a diagram illustrating an example of calculation of exceedance performed by a calculator 225.
FIG. 8 is a diagram illustrating an example of calculation of exceedance performed by the calculator 225.
FIG. 9 is a diagram illustrating an example of selecting and modifying an instance by a selector 227 and a changer 228.
FIG. 10 is a diagram illustrating an example of groups after correction.
FIG. 11 is a flowchart illustrating an example of processing (a method of generating corrected training data) executed by the device.
FIG. 12 is a diagram illustrating training data that is acquired by an acquisition unit 221.
FIG. 13 is a diagram illustrating grouping performed by the grouping unit 222.
FIG. 14 is a diagram illustrating correction processing on pairs of groups that is performed by the correction trial unit 223.
FIG. 15 is a diagram illustrating results of aggregation of results of trials of the correction processing that is performed by the aggregation unit 224.
FIG. 16 is a diagram illustrating an example of calculation of exceedance performed by the calculator 225.
FIG. 17 is a diagram illustrating an example of calculation of exceedance performed by the calculator 225.
FIG. 18 is a diagram illustrating selecting and modifying an instance by a selector 227 and the changer 228.
FIG. 19 is a diagram illustrating groups after correction.
FIG. 20 is a flowchart illustrating an example of a process of generating corrected training data that is executed by the device.
FIG. 21 is a flowchart illustrating an example of a process of generating corrected training data that is executed by the device.
FIG. 22 is a diagram for describing information processing according to the embodiment.
FIG. 23 is a diagram for describing a hardware configuration example of the device.

Description of Embodiments

Embodiments will be described in detail below based on the drawings. The embodiments do not limit the disclosure. Each embodiment may be combined within a range without inconsistency.

In recent years, machine learning has been used for decision-making on individuals for entrance examinations, employment, credit, etc. The cases in which protected attributes, such as genders and races, on which no discrimination is supposed to be made have an effect on the result of classification (prediction result) however have occurred and have been a problem. For this reason, fairness-considered machine learning that makes a correction to eliminate biases from a prediction result in consideration of potential social problems, such as discrimination, is expected.

Fairness of groups in fairness-considered machine learning is fairness between groups dependent on the values of protected attributes and indicates that probability of each group matches between the groups. For example, when the protected attribute is genders, it is in that there are a male group and a female group and a rate of employment and a rate of loan screening matches. Fairness-considered machine learning makes a correction by modifying data when there is a difference in probability between groups in data that is input and output. Fairness and accuracy are a trade-off and therefore reducing data modification as much as possible and meeting fairness are needed.

Furthermore, not a single protected attribute but multiple protected attributes may be specified. For example, the types and the number of attributes are determined according to the social background or the cultural background and the use case and, when multiple protected attributes are specified, there are groups of combinations of the protected attributes.

According to the disclosed technique, particularly, a difference (unfairness) in the result of classification between groups dependent on groups that are grouped by combinations of a plurality of protected attributes is corrected. To determine whether fairness is met, a certain threshold (tolerance) may be used. A tolerance may be set for each protected attribute and, in that case, the tolerance may be set at a relatively small value in the case of a protected attribute to be corrected strictly and, if not, the tolerance my be set at a relatively large value. An existing fairness algorithm capable of correcting fairness between groups that are grouped by a single protected attribute may be used directly. The fairness algorithm is targeted at data modification (pre-processing or post-processing). An algorithm (in-processing) that configures a model in consideration of fairness can be targeted at. The fairness algorithm may be targeted at issues of binary classification not causing inversion in order (for example, an order in the proportion of favorableness) between original groups. Particularly, the case in which pre-processing is targeted at will be described below.

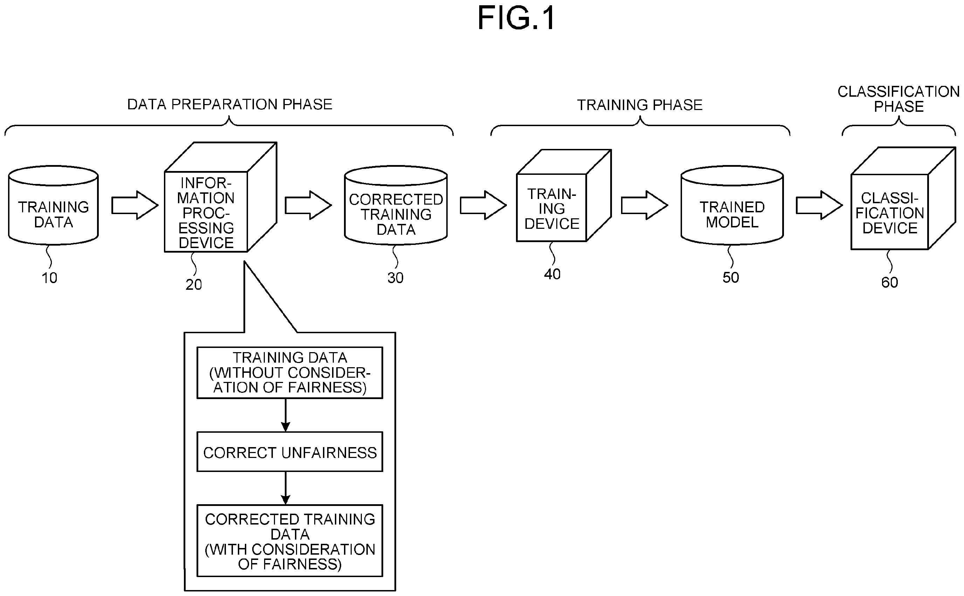

FIG. 1 is a diagram for describing an information processing device 20 according to an embodiment. FIG. 1 exemplifies a data preparation phase, a training phase, and a classification phase as phases relating to machine learning.

In the data preparation phase, the information processing device 20 corrects training data 10. The training data 10 is unfair data in which protected attributes can have a significant effect on a classification result, that is, data without consideration of fairness. The unfairness is corrected by the information processing device 20 and data is generated as corrected training data 30.

In the training phase, a training device 40 generates a trained model 50 by machine learning using the corrected training data 30. In the classification phase, a classification device 60 performs classification (prediction) using the trained model 50.

The information processing device 20 executes data modification on the training data that meets fairness by minimum data modification on groups of combinations of a plurality of protected attributes. Specifically, the information processing device 20 acquires a plurality of sets of data each of which is labelled as favorable or unfavorable. Subsequently, the information processing device 20 calculates a ratio of the number of sets of favorable data and the number of sets of unfavorable data with respect to each of a plurality of types of combinations of first attributes and second attributes that are associated with the sets of data, respectively.

When the difference in the ratio that is calculated with respect to each of the types (groups) is at or above a threshold, with respect to each combination of the first type contained in the types and each of all other types, based on the ratio, the information processing device 20 specifies candidate data to be changed among the sets of data with which the first attribute and the second attribute corresponding to the first type are associated.

Subsequently, based on the candidate data to be changed that is specified with respect to each combination, the information processing device 20 selects the first data from among the sets of data with which the first attribute and the second attribute corresponding to the first type are associated. Thereafter, by changing the label of the first data contained in the sets of data, the information processing device 20 generates the corrected training data 30 that is training data.

In other words, the information processing device 20 generates groups of combinations of a plurality of protected attributes, make trials of discrimination correction processing on all pairs of two groups selected from the groups, aggregates the trial results with respect to each group, and modifies the instances in a descending order in the score. As described, the information processing device 20 is able to incorporate the idea of one-versus-one classification in which binary classification algorithm is applied to multiclass classification, reduce unnecessary data modification, and increase fairness in training data and classification data.

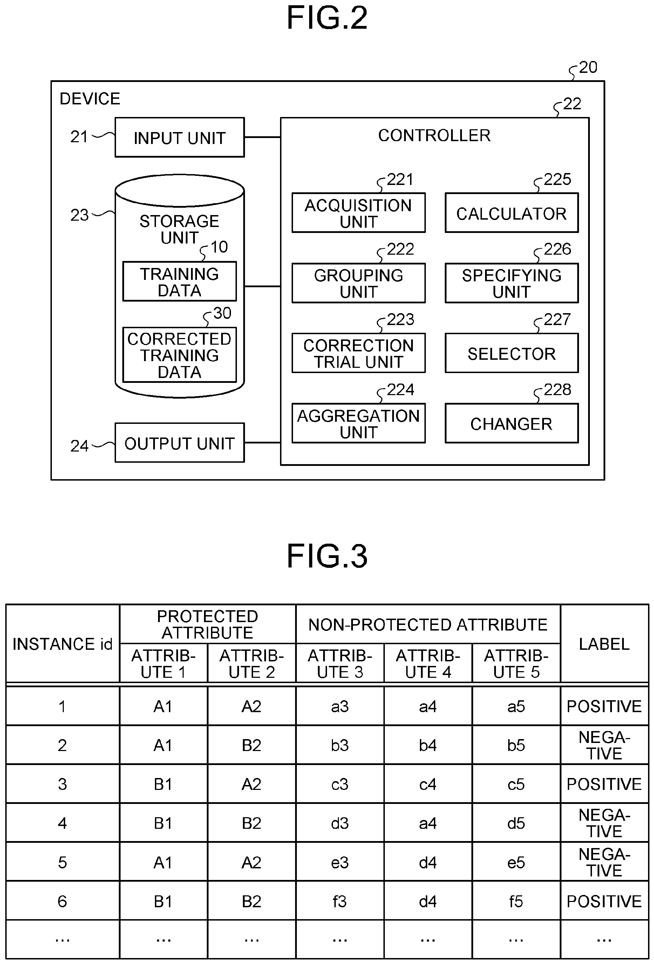

FIG. 2 is a diagram illustrating an example of functional blocks of the information processing device. The information processing device 20 includes an input unit 21, a controller 22, a storage unit 23, and an output unit 24.

The training data 10 is input to the input unit 21. Using the training data 10 that is input to the input unit 21, the controller 22 generates the corrected training data 30. Details of the controller 22 will be described below. The storage unit 23 stores various programs necessary for processing performed by the controller 22 and various types of intermediate data that the controller 20 generates in a process of various types of processing. For example, the storage unit 23 stores the training data 10 and the corrected training data 30. The output unit 24 outputs the corrected training data 30 that is generated by the storage unit 23.

The controller 22 will be described in detail. The controller 22 includes an acquisition unit 221, a grouping unit 222, a correction trial unit 223, the aggregation unit 224, a calculator 225, a specifying unit 226, a selector 227, and a changer 228.

The acquisition unit 221 acquires the training data 10 that is input to the input unit 21 and stores the training data 10 in a storage 13. The example of the training data 10 will be described with reference to FIG. 3.

FIG. 3 is a diagram illustrating an example of the training data 10. The training data 10 contains sets of data on a plurality of instances. In each of the sets of data, an instance id (identifier) and attributes are associated with each another and is labeled. An example of an instance is a person.

Attributes are classified into protected attributes and non-protected attributes. Protected attributes are attributes whose effects on classification results are intended to be reduced. Non-protected attributes are attributes other than the protected attributes. An example of the protected attribute is gender, race, religion, or the like. An example of the non-protected attribute is age, address, score (for example, a score of a test), or the like. In FIG. 3, the attributes are presented as attributes 1 to 5. The content of the non-protected attributes (attributes 3 to 5) is presented as a3 to f3, a4 to f4, and a5 to f5.

A label presents a classification result and specifically presents a favorable or unfavorable binary value. An example of favorableness and unfavorableness is, for example, passing and failing representing passing or failing in an examination.

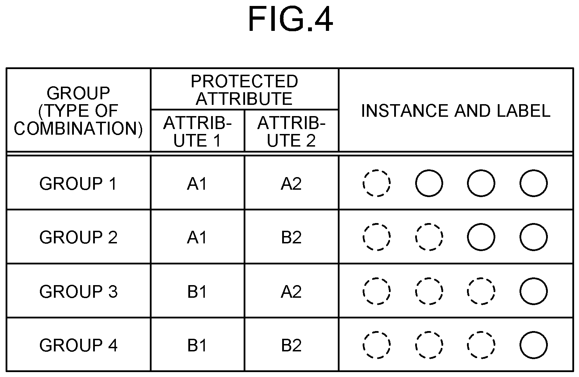

Back to FIG. 2, the grouping unit 222 groups the training data 10 that is acquired by the acquisition unit 221 into a plurality of combinations of protected attributes. This will be described with reference to FIG. 4.

FIG. 4 is a diagram illustrating an example of grouping performed by the grouping unit 222. The grouping unit 222 generates pairs of combinations of A1, A2, B1 and B2 that are protected attributes of training data 13 illustrated in FIG. 3, thereby performing grouping into four groups 1 to 4. The group 1 is a group in which the attribute 1 is A1 and the attribute 2 is A2. The remaining groups 2 to groups 4 are as illustrated in FIG. 4, too. The instances and labels corresponding to each group are presented in circles in the drawing. The number of circles corresponds to the number of instances (four in the example). A circle is presented in a solid circle or a dashed circle. A dashed circle corresponds to a favorable label. The dashed circle corresponds to an unfavorable label. In this case, the grouping unit 222 may calculate element metrics. An example of an element metric is a ratio of the number of sets of favorable data and the number of sets of unfavorable data. An example of the ratio is a proportion of the number of favorable instances to the number of all the instances (the number of favorable instances/the number of all the instances), a proportion of the number of unfavorable instances to the number of all the instances (the number of unfavorable instances/the number of all the instances), a proportion of the number of favorable instances to the number of unfavorable instances (the number of favorable instances/the number of unfavorable instances), and a proportion of the number of unfavorable instances to the number of favorable instances (the number of unfavorable instances/the number of favorable instances). Except as particularly described, the proportion is the proportion of the number of favorable instances to the number of all the instances (the number of favorable instances/the number of all the instances).

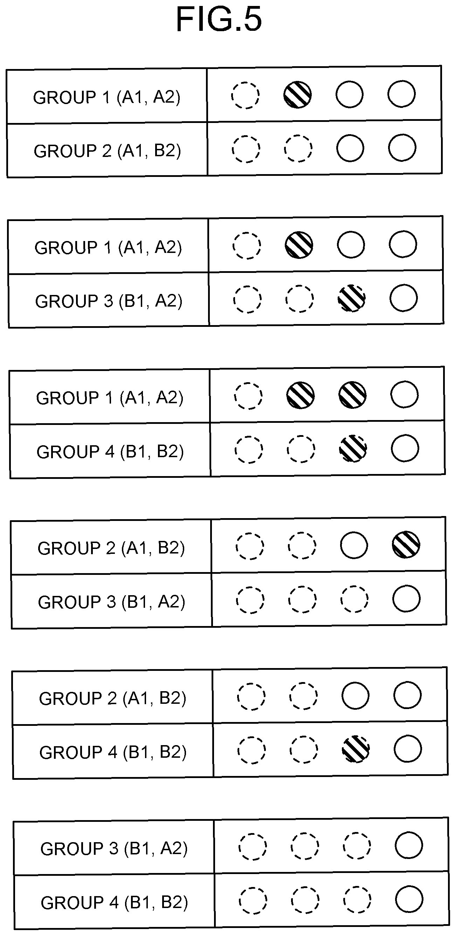

Back to FIG. 2, the correction trial unit 223 has a trial of the correction processing on the pairs of the groups (pairs of the types of combinations) that are grouped by the grouping unit 222. This will be described with reference to FIG. 5.

FIG. 5 is a diagram illustrating an example of correction processing on pairs of groups that is performed by a correction trial unit 223. The correction trial unit 223 generates, from combinations of four groups of the groups 1 to 4, six pairs of groups that are a pair of group 1 and group 2, a pair of group 1 and group 3, a pair of group 1 and group 4, a pair of group 2 and group 3, a pair of group 2 and group 4, and a pair of group 3 and group 4. The correction trial unit 223 has a trial of the correction processing on each of the six pairs of groups.

The correction trial unit 223 has a trial of the correction processing between two groups configuring the pair with respect to each of the six pairs. The correction trial unit 223 has a trial of the correction processing using a fairness algorithm that is also referred to as a bias-bias algorithm. The fairness algorithm between two groups is known and therefore detailed description thereof is not given here. An example of the correction processing is changing the label of the instance. Changing the label includes a change from favorable to unfavorable and change from unfavorable to favorable. Another example of the correction processing is addition and modification of attributes. Except as particularly described, the correction processing is changing the label below. What the correction trial unit 223 performs is a trial of the correction processing and therefore note that, while the result of the correction processing can be acquired, fairness between two groups is not immediately corrected according to the result, that is, changing the label does not modifies the instance.

FIG. 5 exemplifies the result of the correction processing. The instances to be modified are presented in hatching. In the example, in the pair of the group 1 and the group 2, the second instance (from the left) in the group 1 is to be modified. The remaining pairs are as illustrated in FIG. 5. In the pair of the group 3 and the group 4, there is no instance to be modified.

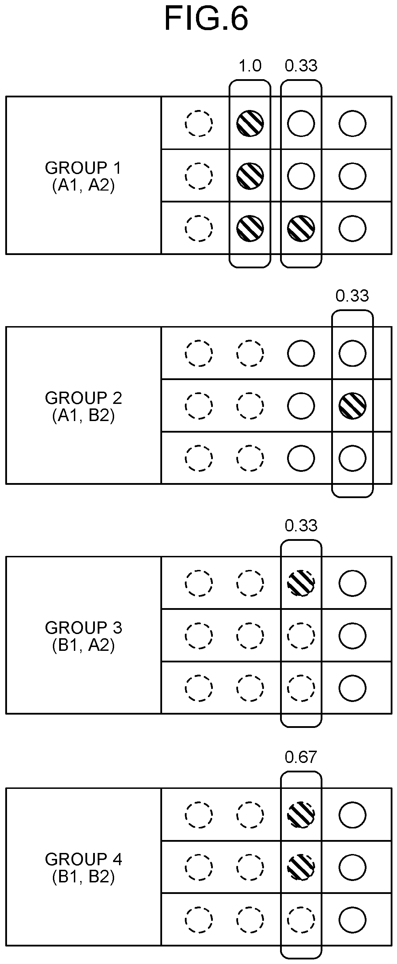

Back to FIG. 2, the aggregation unit 224 aggregates the results of trials of the correction processing performed by the correction trial unit 223 with respect to each group. This will be described with reference to FIG. 6.

FIG. 6 is a diagram illustrating an example of results of aggregation of results of trials of the correction processing that is performed by an aggregation unit 224. The aggregation unit 224 aggregates the results of trials of the correction processing on the six group pairs presented in FIG. 5 with respect to each of the group 1, the group 2, the group 3, and the group 4. In other words, as illustrated in FIG. 6, the aggregation unit 224 aggregates three types of results of trials of the correction processing with respect to each of the groups 1 to 4. For example, the group 1 is exemplified to describe aggregation where the aggregation unit 224 aggregates one unfavorable label (dashed circle), two favorable labels (solid circles), and one label (hatching) to be changed from the pair of the group 1 and the group 2. Similarly, the aggregation unit 224 aggregates one unfavorable label, two favorable labels, and one label to be changed from the pair of the group 1 and the group 3 and aggregates one unfavorable label, one favorable label, and two labels to be changed from the pair of the group 1 and the group 4.

The aggregation unit 224 assigns a score to an instance. The timing of assigning a score is not particularly limited and the assignment can be executed until selecting by the selector 227 to be described below. The score is an index (confidence) indicating that there is a substantial need to modify the instance. The aggregation unit 224 determines a score such that the larger the number of results of trials according which the instance is to be modified is, the higher the score is. For example, the aggregation unit 224 determines a score based on the proportion of the number of results of trials (ratio, probability, etc.). In the example illustrated in FIG. 6, because the second instance of the group 1 is to be modified according to all the three types of results of trials of the correction processing, the score is 3/3, that is, 1.0. The score of the third instance of the group 1 is 1/3, that is, 0.33 and the same applies to the fourth instance of the group 2 and the third instance of the group 3. The score of the third instance of the group 4 is 2/3, that is, 0.67. The scores of other instances whose scores are not illustrated is 0/3, that is, 0. The instances to which the scores are assigned can be candidate instances to be modified.

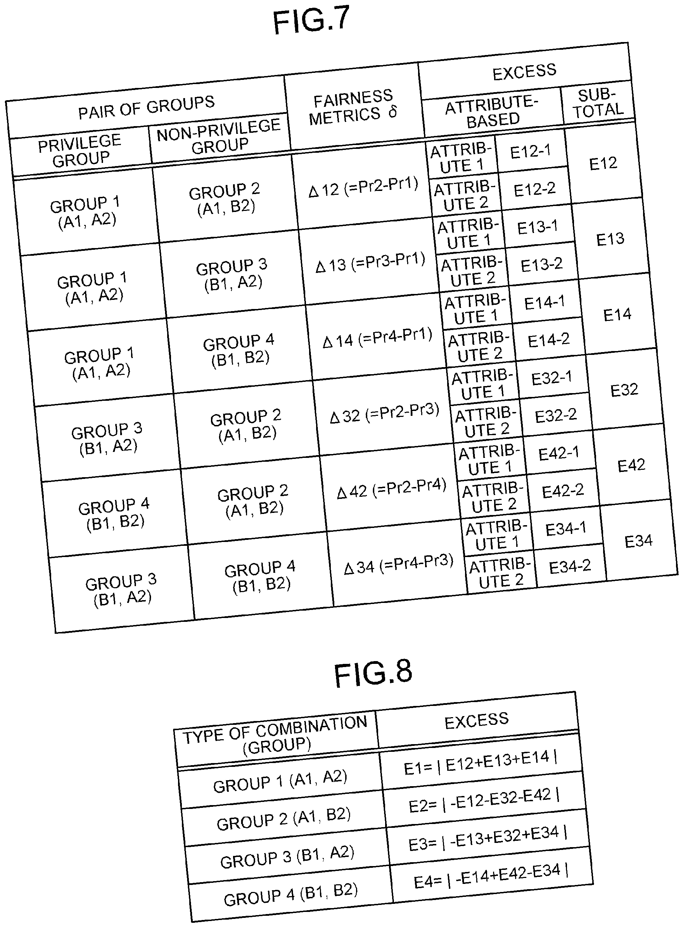

Back to FIG. 2, the calculator 225 calculates an excess with respect to each pair of groups. The excess indicates that the degree of unfairness between the groups of which the pair consists is at or above a certain degree. Calculation of an excess will be described with reference to FIGS. 7 and 8.

FIGS. 7 and 8 are diagrams illustrating an example of calculation of excesses performed by the calculator 225. With reference to FIG. 7, the calculator 225 classifies the two groups of which the pair consists into a privileged group and an unprivileged group. The privileged group is a group that receives preferential treatment. The unprivileged group is a group that receives cold treatment. The classification is performed based on the magnitude of the element metrics (for example, the proportion of favorableness). For example, the calculator 225 classifies one of two groups that has a large proportion of favorableness as the privileged group. The calculator 225 classifies one of two groups that has a small proportion of favorableness as the unprivileged group. In the example illustrated in FIG. 7, as for the pair of the group 1 and the group 2, the calculator 225 classifies the group 1 as the privileged group and classifies the group 2 as the unprivileged grou1p. The remaining pairs of groups are as illustrated in FIG. 7.

The calculator 225 calculates a fairness metric $\delta$ with respect to each of the pairs. A fairness metric $\delta$ is a metric for measuring fairness of data and a model. In order to determine fairness between the groups, a fairness metric $\delta$ taking a statistical parity that is calculated according to Equation (1) below as an example is used as an example. Note that, in addition to this, there are a variety of fairness metrics based on the probability, distance, distribution, etc., and any one of the metrics may be selected as appropriate according to the user case and may be used.

$$\delta = Pr(Y = 1 | D = unprivileged|) \\ - Pr(Y = 1 | D = privileged|) \tag{1}$$

In Equation (1) above, Y denotes a label and Y=1 presents favorableness. D denotes a protected attribute, D=unpriviledged presents that it is an unprivileged group, and D=priviledged presents that it is a privileged group. The first term on the right side represents a favorable distribution of the unprivileged group. The second term on the right side represents a favorable distribution of the privileged group. It is represented that, the larger the value of the fairness metric $\delta$ is, the larger the unfairness between the groups is.

In FIG. 7, the fairness metric $\delta$ in the pair of the group 1 and the group 2 is presented as $\delta 12$ (=Pr2-Pr1). A distribution Pr2 is a distribution of the group 2. A distribution Pr1 is a distribution of the group 1. The remaining pairs of groups are as illustrated in FIG. 7.

The calculator 225 calculates an excess from the fairness metrics $\delta$. The excess presents how much the calculated fairness metric $\delta$ deviates from a tolerance $\varepsilon$ that is an example of a threshold that is set for the fairness metric $\delta$. In the example, the calculator 225 calculates an excess with respect to each attribute and calculates a subtotal of the excesses. Accordingly, a different tolerance $\varepsilon$ can be set according to the attribute. In FIG. 7, from among the excesses in the pair of the group 1 and the group 2, the excess corresponding to the attribute 1 is presented as an excess E12-1. The excess corresponding to the attribute 2 is presented as an excess E12-2. A subtotal (total) of the excess E12-1 and the excess E12-2 is presented as an excess E12. Other pairs of groups are as illustrated in FIG. 7.

With reference to FIG. 8, the calculator 225 calculates an excess of each group from the subtotals of excesses illustrated in FIG. 7. The calculator 225 calculates an excess as a value (herein, an absolute value) obtained by making an addition or a subtraction of the subtotals with respect to the group. In FIG. 8, the excess of the group 1 is presented as an excess E1. The calculator 225 determines whether to make an addition or a subtraction of the subtotals according to which one of the privileged group and the unprivileged group the group is in the pair of groups on which the subtotal is calculated. In the example, the calculator 225 makes an addition of the subtotals when the group is the privileged group and makes a subtraction of the subtotals when the group is the unprivileged group. This is because the direction of correction differs between a privileged group (a group that receives preferential treatment) and an unprivileged group (a group that receives cold treatment). When only additions are made, if it is necessary to make corrections in both preferable treatment and cold treatment, the correction on one side increases the excess on the other side. Using addition and subtraction properly makes it possible to prevent the excess from increasing too much. An excess also means that the priority in correction is increased as described below and inhibiting the excess leads to lowering the priority. In the example illustrated in FIG. 8, the calculator 225 calculates an excess E1 of the group 1 as E1=|E12+E13+E14|. Other groups are as illustrated in FIG. 8.

Back to FIG. 2, based on the excesses that are calculated by the calculator 225, the specifying unit 226 specifies (selects) a group to be corrected. For example, the specifying unit 226 specifies a group whose excess is the largest as a group to be corrected. When there are a plurality of groups whose excesses are the largest, for example, the specifying unit 226 specifies, as a group to be corrected, the group that is high in the number of candidate instances to be modified (candidate labels to be changed) or in the score (probability). The group 1 is specified as one to be corrected here.

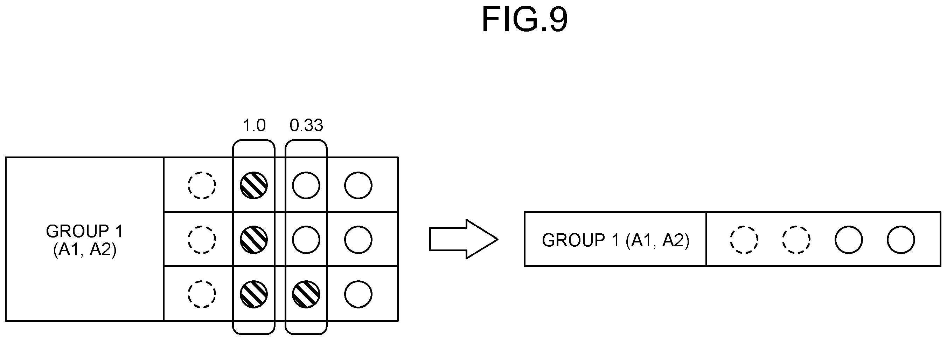

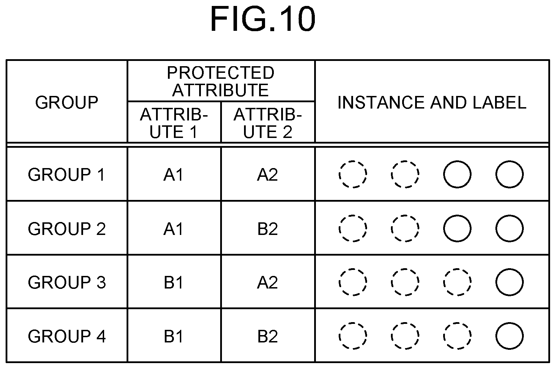

The selector 227 selects (specifies) an instance to be modified from the instances contained in the group that is specified by the specifying unit 226. The changer 228 modifies the instance by changing the label of the selected instance. This will be described with reference to FIG. 9 and FIG. 10.

FIG. 9 is a diagram illustrating an example of selecting and modifying an instance by the selector 227 and the changer 228. As described above, the group 1 is to be corrected and, on the left side in FIG. 9, the result of aggregation on the group 1 (FIG. 6) is presented again. The score of the second instance is the highest at 1.0 and therefore the selector 227 selects the second instance as an instance to be modified. The changer 228 changes the label of the second instance that is selected by the selector 227. In the example, the changer 228 changes the label of the second instance from favorable to unfavorable as illustrated on the right in FIG. 9.

FIG. 10 is a diagram illustrating an example of the groups after correction. Compared with FIG. 4 described above, the label of the second instance of the group 1 is changed from favorable to unfavorable and accordingly the difference in the proportion of favorableness between the group 1 and other groups 2 to 4 decreases. In other words, fairness among the groups is corrected (unfairness is reduced).

The above-described sets of processing performed by the specifying unit 226, the selector 227, and the changer 228 that are described with reference to FIGS. 7 to 10 may be executed repeatedly until the excess falls within the tolerance $\varepsilon$. In doing so, each set of processing may be executed within a range in which fairness (the order in proportion of favorableness) among the groups does not reverse. In that case, for example, the changer 228 changes the label data when the order among the groups does not change if the changer 228 changes the label that is selected by the selector 227 in the group that is specified by the specifying unit 226. Accordingly, the excess converges easily.

For example, by correcting the training data 10 (FIG. 1) as described above, the controller 22 generates the corrected training data 30.

Depending on the fairness algorithm, a modification or an addition is made to the non-protected attributes and, in that case, the changer 228 may use and employ an appropriate aggregation function from candidates to be modified. For example, the changer 228 is able to employ majority vote in the case of a nominal scale or take an average in the case of a ratio scale.

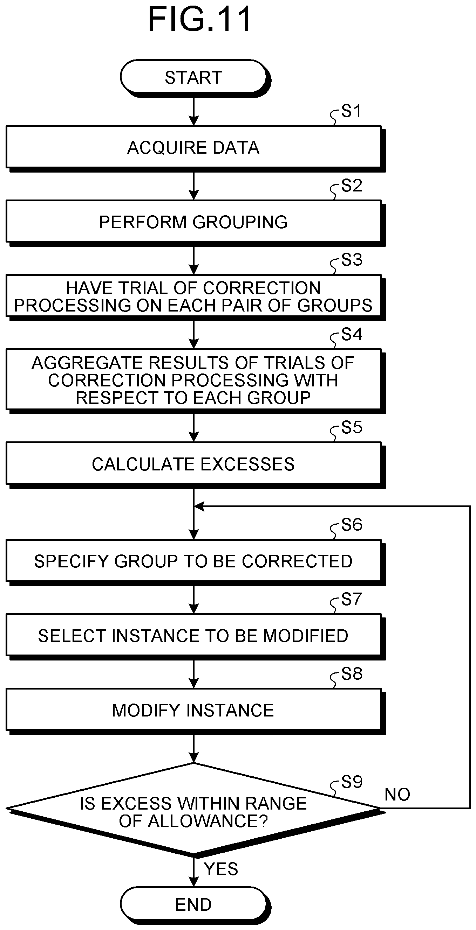

FIG. 11 is a flowchart illustrating an example of a method of generating corrected training data that is processing executed by the device.

The acquisition unit 221 acquires the training data 10 that is input to the input unit 21 (S1).

Subsequently, as described above with reference to FIG. 4, the grouping unit 222 performs grouping on the training data 10 that is acquired by the acquisition unit 221 (S2).

As described above with reference to FIG. 5, the correction trial unit 223 then has a trial of the correction processing on each pair of groups (S3).

Thereafter, as described above with reference to FIG. 6, the aggregation unit 224 aggregates the results of trials of the correction processing with respect to each group (S4).

Subsequently, as described above with reference to FIG. 7 and FIG. 8, the calculator 225 calculates excesses (S5).

As described above with reference to FIG. 7 and FIG. 8, the specifying unit 226 specifies a group to be corrected (S6).

Subsequently, as described above with reference to FIG. 9, the selector 227 selects an instance to be modified (S7).

Thereafter, as described above with reference to FIG. 9, the changer 228 modifies the instance (S8).

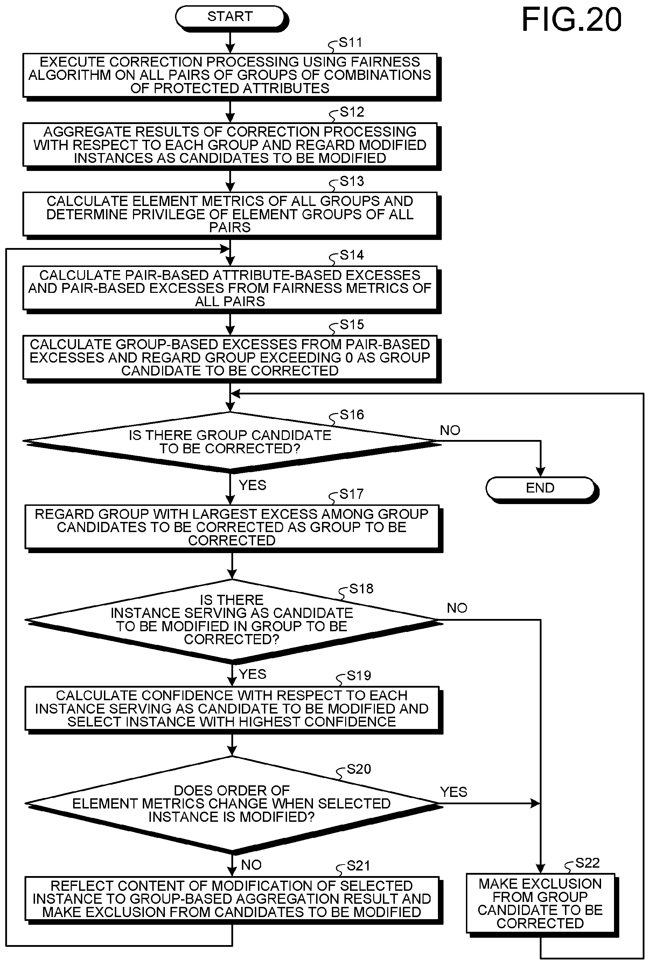

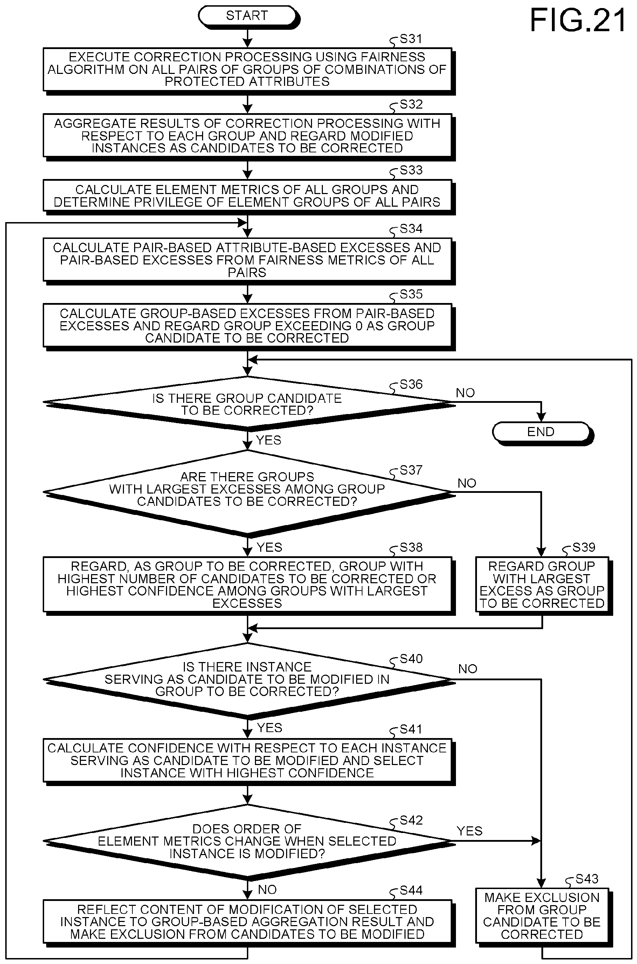

Thereafter, the controller 22 determines whether the excess is within a range of the tolerance $\varepsilon$ (S9). When the excess is within the range of the tolerance $\varepsilon$ (YES at S9), the controller 22 ends the process of the flowchart. If not (NO at S9), the controller 22 returns the process to S6. While the sets of processing of S6 to S9 are executed repeatedly, as described above, these sets of processing may be executed within the range in which fairness (the order in the proportion of favorableness) among the groups does not reverse. The flow on this will be exemplified in FIG. 20 and FIG. 21 to be described below.

The corrected training data 30 that is generated as described above is corrected such that, when there are a plurality of protected attributes, the protected attributes are combined and optimization is performed on the entire group. If there are a plurality of protected attributes and the protected attributes are corrected one by one in order, when one protected attribute is corrected, the content of another protected attribute is not taken into consideration and thus there is a problem in that discrimination in the other attribute gets worse. There are also a problem in that the result of another protected attribute that is corrected once is changed and a problem in that discrimination of the group of the combination of protected attributes is not corrected. Repeating, on groups of the combinations of protected attributes, a process of making a correction between selected two groups (a pair) and making a correction on the next pair is also considered. In this case, however, an instance to be modified is determined by the selected pair of groups, the result of modification results in a local solution. According to the method of the embodiment, these problems are reduced.

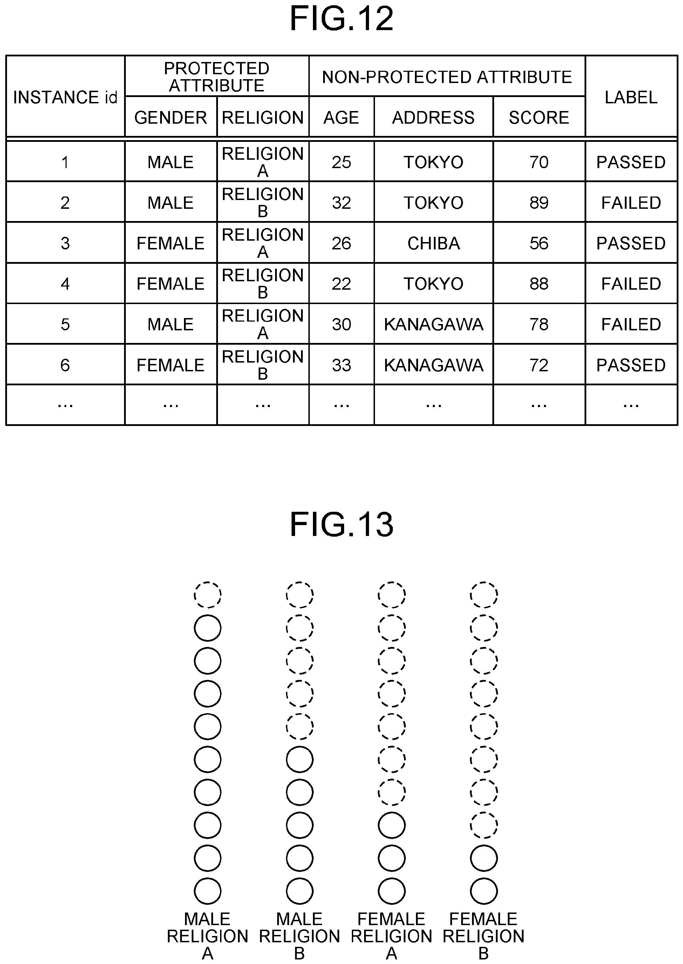

With reference to FIGS. 12 to 21, a specific example of the above-described process will be described. Detailed description of the content overlapping the description above will be omitted.

FIG. 12 is a diagram illustrating the training data that is acquired by an acquisition unit 221. The instances are examinees (applicants) of an examination. The protected attributes are genders and religions. The non-protected attributes are ages, addresses, and scores (the scores of the examination). The labels are passing (favorable) and failing (unfavorable).

FIG. 13 is a diagram illustrating grouping performed by the grouping unit 222. The grouping unit 222 performs grouping into a group of male and a religion A, a group of male and a religion B, a group of female and the religion A, and a group of female and the religion B. The number of instances (the number of circles) contained in each group is 10. The solid circles correspond to passing (favorable) and the dashed circles correspond to failing (unfavorable).

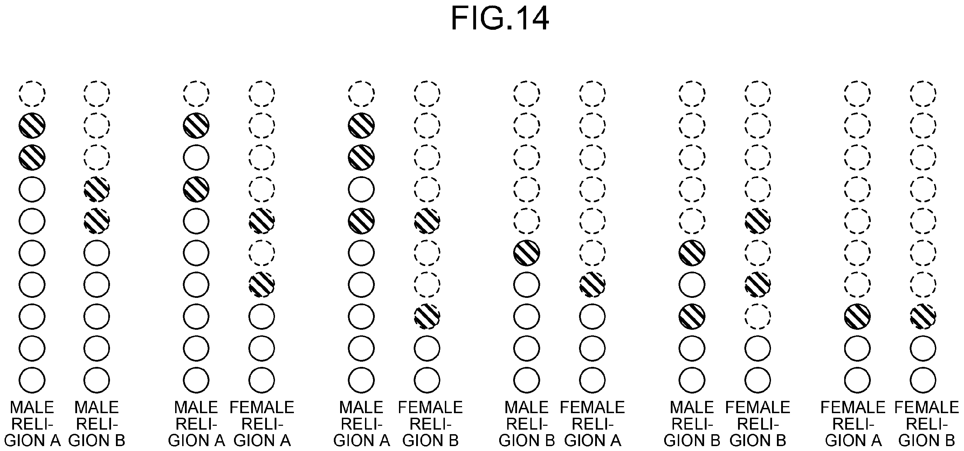

FIG. 14 is a diagram illustrating correction processing on pairs of groups that is performed by the correction trial unit 223. The correction trial unit 223 has a trial of the correction processing on each of six pairs of groups. Instances to be modified are presented in a hatched manner.

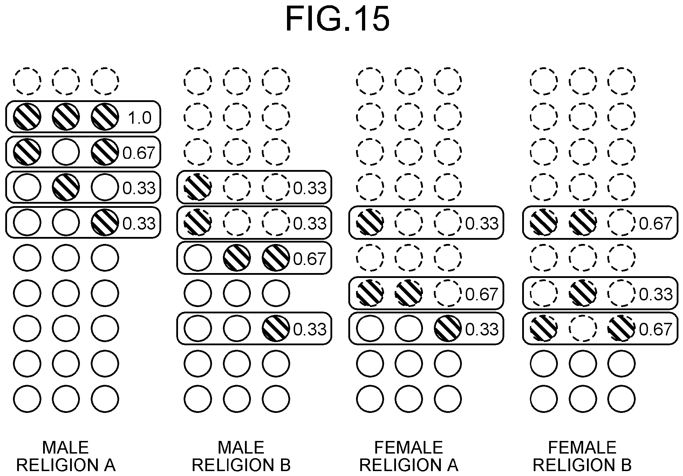

FIG. 15 is a diagram illustrating a result of aggregation of results of trials of the correction processing that is performed by the aggregation unit 224. Scores assigned to the instances are presented in the drawing.

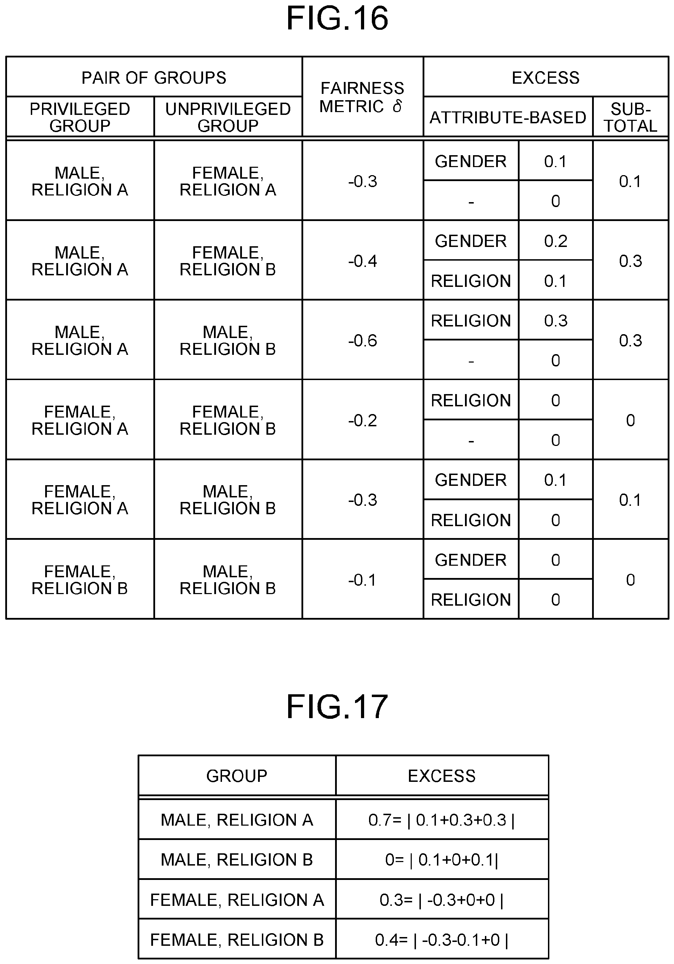

FIG. 16 and FIG. 17 are diagrams illustrating calculation of excesses performed by the calculator 225. With reference to FIG. 16, herein, the calculator 225 sets a tolerance $\varepsilon_1$ of excess according to genders at 0.2 and sets a tolerance $\varepsilon_2$ of excess according to religions at 0.3. The calculator 225 calculates amounts above these excesses as excesses according to the attributes. In the pair of the group of male and the religion A and the group of female and the religion A, a fairness metric $\delta$ is -0.3. The excess in gender exceeds the tolerance $\varepsilon_2$ (0.2) by only 0.1 and thus is 0.1. The excess in religion does not exceed the tolerance $\varepsilon_3$ (0.3) and thus is 0. The subtotal of the excesses (total value) is 0.1. Other groups are as illustrated in FIG. 16.

With reference to FIG. 17, the calculator 225 calculates an excess of each group as a value obtained by making an addition or a subtraction of the subtotals. The calculator 225 calculates an excess of the group of male and the religion A as 0.7. Other groups are as illustrated in FIG. 17.

From among the four groups illustrated in FIG. 17, the group of male and the religion A with the largest excess is specified by the specifying unit 226 as a group to be corrected.

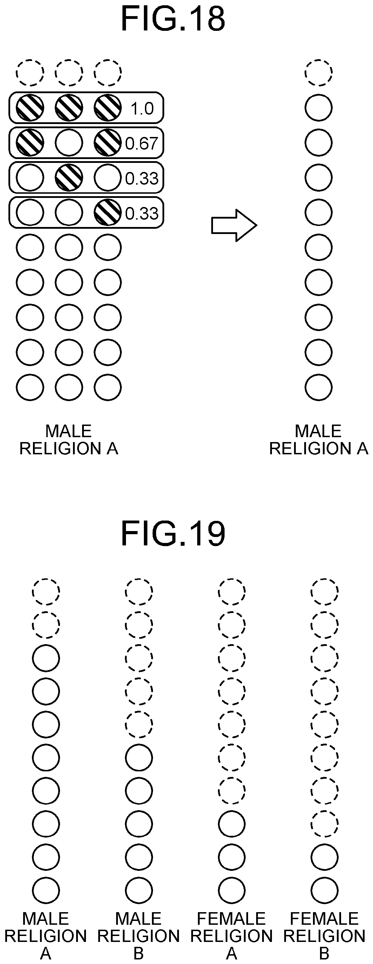

FIG. 18 is a diagram illustrating selecting and modifying an instance by the selector 227 and the changer 228. As illustrated on the left in FIG. 18, the instance that is assigned with the highest score of 1.0 among the instances contained in the group of male and the religion A is selected by the selector 227 as an instance to be modified. As illustrated on the right in FIG. 18, the label of the instance that is selected by the selector 227 is changed by the changer 228 from passing to failing, so that the instance is modified.

FIG. 19 is a diagram illustrating groups after correction. Compared with FIG. 13 described above, the label of the second (from the top) instance in the group of male and the religion A is changed from favorable to unfavorable. As a result, the difference in proportion of favorableness between the group of male and the religion A and other groups decreases. In other words, the fairness among the groups is corrected (unfairness is reduced).

The method of generating corrected training data described above is an example only and a generation method is specified from various points of view. Some examples will be described with reference to FIG. 20 and FIG. 21.

FIG. 20 is a flowchart illustrating an example of a process of generating corrected training data that is executed by the device.

The correction trial unit 223 executes the correction processing using the fairness algorithm on all pairs of groups of combinations of protected attributes (S11). The specific example is as described above with reference to FIGS. 5 and 14.

Subsequently, the aggregation unit 224 aggregates results of the correction processing with respect to each of the groups and regards modified instances as candidates to be modified (S12). A specific example is as described above with reference to FIG. 6 and FIG. 15. The instances that are presented in a hatched manner in FIG. 6 and FIG. 15 are candidate instances to be corrected.

The calculator 225 calculates element metrics of all the groups (for example, the proportion of favorableness) and determines privilege of the element groups of all the pairs (S13). A specific example is as described above with reference to FIG. 7 and FIG. 16.

From the fairness metrics of all the pairs, the calculator 225 calculates pair-based attribute-based excesses and pair-based excesses (S14). A specific example is as described above with reference to FIG. 7 and FIG. 16.

The calculator 225 calculates group-based excesses from the pair-based excesses and regards a group exceeding 0 as a group candidate to be corrected (S15). A specific example is as described above with reference to FIG. 7 and FIG. 16.

The controller 22 determines whether there is a group candidate to be corrected. When there is a group candidate to be corrected (YES at S16), the controller 22 moves the process forward to S17. If not (NO at S16), the controller 22 ends the process of the flowchart.

The specifying unit 226 regards a group with the largest excess among the group candidates to be corrected as a group to be corrected (S17). A specific example is as described above.

The controller 22 determines whether there is an instance serving as a candidate to be modified in the group to be corrected (S18). When there is an instance serving as a candidate to be modified (YES at S18), the controller 22 moves the process forward to S19. If not (NO at S18), the controller 22 moves the process forward to S22.

Subsequently, the selector 227 calculates a confidence (score) with respect to each instance serving as a candidate to be modified and selects an instance with the highest confidence (S19). A specific example is as described above with reference to FIG. 9 and FIG. 18.

When the selected instance is modified, the controller 22 determines whether the order of the element metrics (for example, the proportions of favorableness) changes (S20). When the order changes (YES at S20), the controller 22 moves the process forward to S22. If not (NO at S20), the controller 22 moves the process forward to S21.

The changer 228 reflects the content of modification of the selected instance to a group-based aggregation result and makes an exclusion from the candidates to be modified (S21). A specific example is as described above with reference to FIG. 9, FIG. 10, FIG. 18 and FIG. 19. After the processing of S21 completes, the controller 22 returns the process to S16.

Thereafter, the controller 22 makes an exclusion from the group candidates to be corrected (S22). In other words, the controller 22 excludes the group that is regarded as one to be corrected at preceding S17 from the group candidates to be corrected. After the processing of S22 completes, the controller 22 returns the process to S16.

For example, as described above, it is possible to generate the corrected training data 30. Particularly because of the processing of S20, the instances are corrected within a range such that the order of the element metrics (for example, the proportions of favorableness) does not change and thus the process converges easily.

FIG. 21 is a flowchart illustrating an example of a process of generating corrected training data that is a process executed by the device.

The process of S31 to S35 is the same as the process of S11 to S15 described with reference to FIG. 20 above and thus the description is not repeated herein.

The controller 22 determines whether there is a group candidate to be corrected (S36). When there is a group candidate to be corrected (YES at S36), the controller 22 moves the process forward to S37. If not (NO at S36), the controller 22 ends the process of the flowchart.

The controller 22 determines whether there are a plurality of groups with the largest excesses among the group candidates to be corrected (S37). When there are a plurality of groups with the largest excesses (YES at S37), the controller 22 moves the process forward to S38. If not (NO at S37), the controller 22 moves the process forward to S39.

The specifying unit 226 regards, as a group to be corrected, a group with the highest number of candidate instances to be modified or the highest confidence (score) among the groups with the largest excesses (S38). A specific example is as described above. After the processing of S38 completes, the controller 22 moves the process forward to S40.

The specifying unit 226 regards the group with the largest excess as a group to be corrected (S39). A specific example is as described above. After the processing of S39 completes, the controller 22 moves the process forward to S40.

The process of S40 to S44 is the same as the process of S18 to S22 described with reference to FIG. 20 above and thus the description is not repeated herein. After the processing of S43 or S44 completes, the controller 22 returns the process to S36.

For example, as described above, it is possible to generate the corrected training data 30. Particularly because of the processing of S37 to S39, even when there are a plurality of groups with the largest excesses, it is possible to specify a group to be corrected.

According to the information processing device 20 described above, the results of trials of the correction processing with respect to each pair of groups are aggregated and, based on the result of aggregation, the label is changed. Accordingly, for example, compared with the case where only a specific pair of groups is focused and the label is changed, it is possible to prevent the unfairness over the group from increasing. Accordingly, it is possible to increase fairness of the training data 10.

By modifying an instance of a group in a pair of groups with the largest excesses, it is possible to make an appropriate correction. By, after modifying one instance, modifying another instance, it is possible to further make a correction.

Calculating a fairness metric $\delta$ and specifying, as a group of correction symmetry, a group whose fairness metric $\delta$ exceeds a threshold makes it possible to specify a group of correction symmetry with high necessity of correcting fairness.

Specifying a group of correction symmetry based on the results of making an addition or subtraction of the subtotals of excesses of fairness metrics, for example, makes it possible to take into consideration the difference in the direction of correction between the privileged group that receives preferential treatment and the privileged group that receives cold treatment.

Selecting an instance of modification symmetry using the fairness algorithm that corrects fairness between two groups makes it possible to utilize the existing fairness algorithm.

Changing the label when the order of the element metrics (for example, the proportions of favorableness) does not change, that is, correcting instances within a range such that the order does not change makes the process converge easily.

When there are a plurality of groups with the largest excesses, regarding, as a group to be corrected, a group with the highest number of candidate instances to be modified or the highest confidence (score) makes it possible to specify a correction symmetry.

Applying the process to a group of a combination of protected attributes makes it possible to reduce effects of the protected attributes on which no discrimination is to be made on the result of classification.

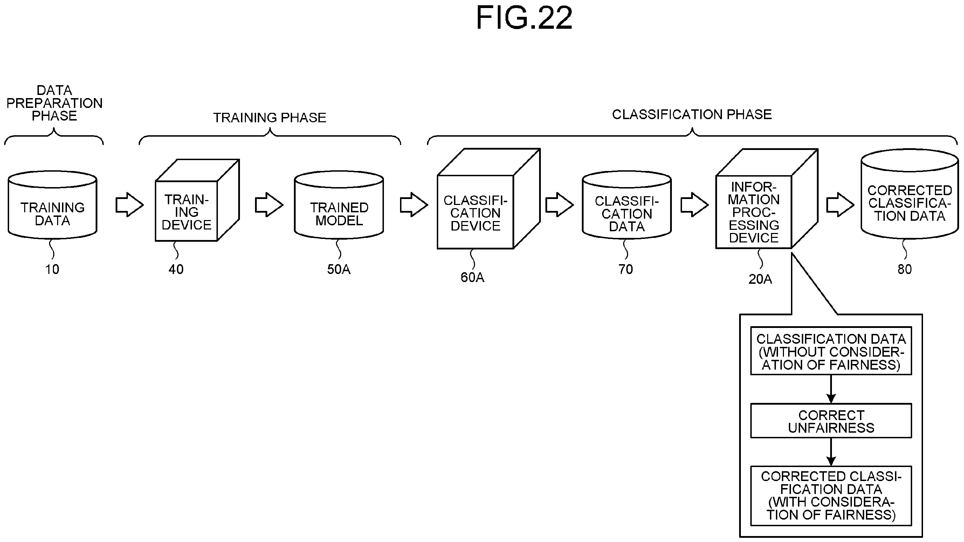

The example in which the process according to the embodiment is for pre-processing of correcting training data has been described. Note that the process according to the embodiment can be for post-processing of correcting classification data (prediction data) that is generated by a trained model. This is because the same method as that for pre-processing is applicable. The difference from pre-processing is only in the type of data and, while pre-processing changes labels (also referred to as observation labels or correct labels) of original data of training/test, post-processing changes labels of prediction data. As for the prediction data, protected attributes are also known in addition to the labels and the correction processing is performed on each pair using the protected attributes and the results are aggregated to determine an instance to be modified. With reference to FIG. 22, post-processing will be described.

FIG. 22 is a diagram for describing information processing according to the embodiment. In a data preparation phase, no correction is made on the training data 10. In a training phase, the training device 40 generates a trained model 50A by machine learning using the training data 10. In a classification phase, a classification device 60A performs classification using the trained model 50A. The result of classification by the trained model 50A is illustrated as classification data 70 in the drawing. The classification data 70 has a similar data structure to that of the training data 10. The classification data 70 is corrected by an information processing device 20A. The information processing device 20A may have a similar configuration to that of the information processing device 20 (FIG. 1). The classification data 70 has the similar data structure to the training data 10 and thus the information processing device 20A is able to correct the classification data 70 in a similar manner to that in which the information processing device 20 corrects the training data 10. The corrected data is illustrated in the drawing as corrected classification data 80. The corrected classification data 80 is data in which unfairness is corrected as in the corrected training data 30 (FIG. 1).

The process according to the embodiment can be for in-processing. This case, for example, employs a configuration in which the classification device 60 (a classification algorithm) illustrated in FIG. 1 is incorporated in the fairness algorithm and accordingly it is dealt with as a classification algorithm that takes fairness into consideration. In in-processing, a model that tends not to cause a bias rather than making a data modification is configured. That is a model and therefore inputs are training/tests and outputs are predictions. Also in this case, the method described above is similarly applicable. In other words, correction processing is performed on training/tests with respect to each pair, resultant prediction data is aggregated, and instances are modified. Compared to pre-processing and post-processing, it is advantageous in view of accuracy and fairness.

The number and types of sets of training data, the types of protected attributes, etc., label examples, instance examples, etc., that are used in the above-described embodiment are an example only and they are changeable freely.

The process procedure, control procedure, specific names, and information including various types of data and parameters that are presented in the description above and the drawings are changeable freely.

Each component of each device illustrated in the drawings is of a functional idea and is not necessarily configured physically as illustrated in the drawings. In other words, specific modes of distribution and integration of each device are not limited to those illustrated in the drawings. In other words, all or part thereof can be configured by being distributed or integrated functionally or physically in any unit according to various types of load and usage. For example, element metrics can be calculated by the correction trial unit 223, the aggregation unit 224, the calculator 225, or the like, other than the grouping unit 222 of the controller 22. Assignment of scores can be executed also by the calculator 225 or the specifying unit 226.

Furthermore, all or given part of each processing function implemented by each device can be realized by a CPU (Central Processing Unit) and a program that is analyzed and executed by the CPU or can be realized as hardware according to a wired logic.

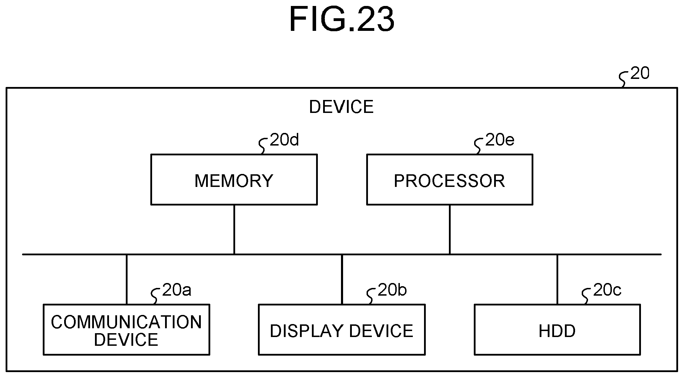

A hardware configuration of the information processing device 20 described above will be described with reference to FIG. 23. The information processing device 20A, the training device 40 and the classification device 60 have the same hardware configuration and thus only the information processing device 20 will be described.

FIG. 23 is a diagram for describing the hardware configuration example. The information processing device 20 includes a communication device 20a, a display device 20b, a HDD (Hard Disk Drive) 20c, a memory 20d, and a processor 20e. They are connected mutually via a bus, or the like.

The communication device 20a is a network interface card, or the like, and communicates with another server. The display device 20b is a device that displays a correction result, etc., and is, for example, a touch panel or a display. The HDD 20c stores a program that runs the functions illustrated in FIG. 2 and a DB.

The processor 20e reads the program from the HDD 20c, or the like, and loads the program in the memory 20d, thereby running the process that executes each of the functions illustrated in FIG. 2, etc. For example, the process executes the same function as that of the controller 22 that the information processing device 20 includes. Specifically, the processor 20e reads the program from the HDD 20c, or the like. The processor 20e executes the process of executing the same process as that performed by the controller 22, etc.

As described above, by reading and executing the program, the information processing device 20 runs as an information processing device that executes the method of generating corrected training data (training data). The information processing device 20 is also able to realize the same functions as those of the above-described example by reading the program from a recording medium using a medium reading device and executing the read program. Programs according to other examples are not limited to being executed by the information processing device 20. For example, the present invention is similarly applicable to the case where another computer or the server executes the program or where they execute the program cooperatively.

The program can be distributed via a network, such as the Internet. The program is recorded in a computer-readable recording medium, such as a hard disk, a flexible disk (FD), a CD-ROM, a MO (Magneto-Optical disk), or a DVD (Digital Versatile Disc), and is read by a computer from the recording medium, so that the program can be executed.

Reference Signs List

10    TRAINING DATA
20    INFORMATION PROCESSING DEVICE
21    INPUT UNIT
22    CONTROLLER
23    STORAGE UNIT
24    OUTPUT UNIT
30    CORRECTED TRAINING DATA
40    TRAINING DEVICE
50    TRAINED MODEL
60    CLASSIFICATION DEVICE
70    CLASSIFICATION DATA
80    CORRECTED CLASSIFICATION DATA
221   ACQUISITION UNIT
222   GROUPING UNIT
223   CORRECTION TRIAL UNIT
224   AGGREGATION UNIT
225   CALCULATOR
226   SPECIFYING UNIT
227   SELECTOR
228   CHANGER

**Claims**

1.  A training data generation program that causes a computer to execute a process comprising:

    acquiring sets of data each of which is labeled as favorable or unfavorable;
    calculating a ratio of the number of sets of favorable data and the number of sets of unfavorable data with respect to each of a plurality of types of combinations of first attributes and second attributes that are associated with the sets of data, respectively;
    when a difference in the ratio that is calculated with respect to each of the types is at or above a threshold, with respect to each combination of a first type contained in the types and each of all other types, based on the ratio, specifying candidate data to be changed from among the sets of data with which the first attribute and the second attribute corresponding to the first type are associated;

based on the candidate data to be changed that is specified with respect to each of the combinations, selecting first data from among the sets of data with which the first attribute and the second attribute corresponding to the first type are associated; and

generating training data by changing a label of the first data contained in the sets of data.

2. The training data generation program according to claim 1, wherein the specifying includes selecting, as the first type, a type with the difference in the ratio most distant from the threshold among the types.

3. The training data generation program according to claim 1 or 2, wherein the specifying includes, after the first data is selected by the selecting and the label of the first data is changed by the generating, with respect to each combination of another first type different from the first type among the types and each of all other types, based on the ratio, specifying candidate data to be changed from among the sets of data with which the first attribute and the second attribute corresponding to the another first type are associated.

4. The training data generation program according to claim 1, wherein the calculating includes calculating, as the difference in the ratio, a fairness metric that is a value based on at least one of a probability, a distance, and a distribution between the two types, and

the specifying includes selecting the first type based on the fairness metric that is calculated by the calculating.

5. The training data generation program according to claim 4, wherein the specifying includes selecting the first type from types with the fairness metrics exceeding a threshold among the types.

6. The training data generation program according to claim 4, wherein the specifying includes selecting the first type based on a result of making an addition or a subtraction of subtotals of excesses of the fairness metrics with respect to thresholds that are set for the first attribute and the second attribute, respectively.

7. The training data generation program according to claim 1, wherein the selecting includes selecting the first data, using a fairness algorithm that corrects fairness between the two types.

8. The training data generation program according to claim 1, wherein the generating includes changing data of the first label when an order in the ratio among the types does not change even when the label of the first data that is selected by the selecting is changed.

9. The training data generation program according to claim 1, wherein the specifying includes, when there are a plurality of types with the differences in the ratio most distant from the threshold among the types, regarding a type with the largest number of candidates to be changed or the largest ratio as the first type.

10. The training data generation program according to claim 1, wherein both the first attribute and the second attribute are protected attributes.

11. A generation method in which a computer executes a process comprising:

acquiring sets of data each of which is labeled as favorable or unfavorable;

calculating a ratio of the number of sets of favorable data and the number of sets of unfavorable data with respect to each of a plurality of types of combinations of first attributes and second attributes that are associated with the sets of data, respectively;

when a difference in the ratio that is calculated with respect to each of the types is at or above a threshold, with respect to each combination of a first type contained in the types and each of all other types, based on the ratio, specifying candidate data to be changed from among the sets of data with which the first attribute and the second attribute corresponding to the first type are associated;

based on the candidate data to be changed that is specified with respect to each of the combinations, selecting first data from among the sets of data with which the first attribute and the second attribute corresponding to the first type are associated; and

generating training data by changing a label of the first data contained in the sets of data.

12. A training data generation device comprising a controller that executes a process comprising:

acquiring sets of data each of which is labeled as favorable or unfavorable;
calculating a ratio of the number of sets of favorable data and the number of sets of unfavorable data with respect to each of a plurality of types of combinations of first attributes and second attributes that are associated with the sets of data, respectively;
when a difference in the ratio that is calculated with respect to each of the types is at or above a threshold, with respect to each combination of a first type contained in the types and each of all other types, based on the ratio, specifying candidate data to be changed from among the sets of data with which the first attribute and the second attribute corresponding to the first type are associated;
based on the candidate data to be changed that is specified with respect to each of the combinations, selecting first data from among the sets of data with which the first attribute and the second attribute corresponding to the first type are associated; and
generating training data by changing a label of the first data contained in the sets of data.

13. A classification data generation program that causes a computer to execute a process comprising:

acquiring sets of data each of which is labeled as favorable or unfavorable;
calculating a ratio of the number of sets of favorable data and the number of sets of unfavorable data with respect to each of a plurality of types of combinations of first attributes and second attributes that are associated with the sets of data, respectively;
when a difference in the ratio that is calculated with respect to each of the types is at or above a threshold, with respect to each combination of a first type contained in the types and each of all other types, based on the ratio, specifying candidate data to be changed from among the sets of data with which the first attribute and the second attribute corresponding to the first type are associated;
based on the candidate data to be changed that is specified with respect to each of the combinations, selecting first data from among the sets of data with which the first attribute and the second attribute corresponding to the first type are associated; and
generating classification data by changing a label of the first data contained in the sets of data.

14. A classification data generation method in which a computer executes a process comprising:

acquiring sets of data each of which is labeled as favorable or unfavorable;
calculating a ratio of the number of sets of favorable data and the number of sets of unfavorable data with respect to each of a plurality of types of combinations of first attributes and second attributes that are associated with the sets of data, respectively;
when a difference in the ratio that is calculated with respect to each of the types is at or above a threshold, with respect to each combination of a first type contained in the types and each of all other types, based on the ratio, specifying candidate data to be changed from among the sets of data with which the first attribute and the second attribute corresponding to the first type are associated;
based on the candidate data to be changed that is specified with respect to each of the combinations, selecting first data from among the sets of data with which the first attribute and the second attribute corresponding to the first type are associated; and
generating classification data by changing a label of the first data contained in the sets of data.

15. A classification data generation device comprising a controller that executes a process comprising:

acquiring sets of data each of which is labeled as favorable or unfavorable;
calculating a ratio of the number of sets of favorable data and the number of sets of unfavorable data with respect to each of a plurality of types of combinations of first attributes and second attributes that are associated with the sets of data, respectively;
when a difference in the ratio that is calculated with respect to each of the types is at or above a threshold, with respect to each combination of a first type contained in the types and each of all other types, based on the ratio, specifying candidate data to be changed from among the sets of data with which the first attribute and the second attribute corresponding to the first type are associated;
based on the candidate data to be changed that is specified with respect to each of the combinations, selecting first data from among the sets of data with which the first attribute and the second attribute corresponding to the first type are associated; and

generating classification data by changing a label of the first data contained in the sets of data.

# FIG.1

EP 4 202 799 A1

DATA PREPARATION PHASE

TRAINING PHASE

CLASSIFICATION PHASE

TRAINING DATA — 10

INFORMATION PROCESSING DEVICE — 20

CORRECTED TRAINING DATA — 30

TRAINING DEVICE — 40

TRAINED MODEL — 50

CLASSIFICATION DEVICE — 60

TRAINING DATA (WITHOUT CONSIDERATION OF FAIRNESS)

↓

CORRECT UNFAIRNESS

↓

CORRECTED TRAINING DATA (WITH CONSIDERATION OF FAIRNESS)

# FIG.2

# FIG.3

| INSTANCE id | PROTECTED ATTRIBUTE | | NON-PROTECTED ATTRIBUTE | | | LABEL |
|---|---|---|---|---|---|---|
| | ATTRIB-UTE 1 | ATTRIB-UTE 2 | ATTRIB-UTE 3 | ATTRIB-UTE 4 | ATTRIB-UTE 5 | |
| 1 | A1 | A2 | a3 | a4 | a5 | POSITIVE |
| 2 | A1 | B2 | b3 | b4 | b5 | NEGA-TIVE |
| 3 | B1 | A2 | c3 | c4 | c5 | POSITIVE |
| 4 | B1 | B2 | d3 | a4 | d5 | NEGA-TIVE |
| 5 | A1 | A2 | e3 | d4 | e5 | NEGA-TIVE |
| 6 | B1 | B2 | f3 | d4 | f5 | POSITIVE |
| ... | ... | ... | ... | ... | ... | ... |

# FIG.4

| GROUP (TYPE OF COMBINATION) | PROTECTED ATTRIBUTE | | INSTANCE AND LABEL |
|---|---|---|---|
| | ATTRIB-UTE 1 | ATTRIB-UTE 2 | |
| GROUP 1 | A1 | A2 | ◌ ◯ ◯ ◯ |
| GROUP 2 | A1 | B2 | ◌ ◌ ◯ ◯ |
| GROUP 3 | B1 | A2 | ◌ ◌ ◌ ◯ |
| GROUP 4 | B1 | B2 | ◌ ◌ ◌ ◯ |

# FIG.5

# FIG.6

# FIG.7

| PAIR OF GROUPS | | FAIRNESS METRICS $\delta$ | EXCESS | | |
| PRIVILEGE GROUP | NON-PRIVILEGE GROUP | | ATTRIBUTE-BASED | | SUB-TOTAL |
| GROUP 1 (A1, A2) | GROUP 2 (A1, B2) | $\Delta 12\ (=Pr2-Pr1)$ | ATTRIBUTE 1 | E12-1 | E12 |
| | | | ATTRIBUTE 2 | E12-2 | |
| GROUP 1 (A1, A2) | GROUP 3 (B1, A2) | $\Delta 13\ (=Pr3-Pr1)$ | ATTRIBUTE 1 | E13-1 | E13 |
| | | | ATTRIBUTE 2 | E13-2 | |
| GROUP 1 (A1, A2) | GROUP 4 (B1, B2) | $\Delta 14\ (=Pr4-Pr1)$ | ATTRIBUTE 1 | E14-1 | E14 |
| | | | ATTRIBUTE 2 | E14-2 | |
| GROUP 3 (B1, A2) | GROUP 2 (A1, B2) | $\Delta 32\ (=Pr2-Pr3)$ | ATTRIBUTE 1 | E32-1 | E32 |
| | | | ATTRIBUTE 2 | E32-2 | |
| GROUP 4 (B1, B2) | GROUP 2 (A1, B2) | $\Delta 42\ (=Pr2-Pr4)$ | ATTRIBUTE 1 | E42-1 | E42 |
| | | | ATTRIBUTE 2 | E42-2 | |
| GROUP 3 (B1, A2) | GROUP 4 (B1, B2) | $\Delta 34\ (=Pr4-Pr3)$ | ATTRIBUTE 1 | E34-1 | E34 |
| | | | ATTRIBUTE 2 | E34-2 | |

# FIG.8

| TYPE OF COMBINATION (GROUP) | EXCESS |
| --- | --- |
| GROUP 1 (A1, A2) | $E1= \lvert E12+E13+E14 \rvert$ |
| GROUP 2 (A1, B2) | $E2= \lvert -E12-E32-E42 \rvert$ |
| GROUP 3 (B1, A2) | $E3= \lvert -E13+E32+E34 \rvert$ |
| GROUP 4 (B1, B2) | $E4= \lvert -E14+E42-E34 \rvert$ |

EP 4 202 799 A1

# FIG.9

# FIG.10

| GROUP | PROTECTED ATTRIBUTE | | INSTANCE AND LABEL |
|---|---|---|---|
| | ATTRIB-UTE 1 | ATTRIB-UTE 2 | |
| GROUP 1 | A1 | A2 | ◌ ◌ ◯ ◯ |
| GROUP 2 | A1 | B2 | ◌ ◌ ◯ ◯ |
| GROUP 3 | B1 | A2 | ◌ ◌ ◌ ◯ |
| GROUP 4 | B1 | B2 | ◌ ◌ ◌ ◯ |

# FIG.11

```
                    ┌─────────────┐
                    │    START    │
                    └──────┬──────┘
                           │              ⌐S1
                    ┌──────▼──────────────┐
                    │    ACQUIRE DATA     │
                    └──────┬──────────────┘
                           │              ⌐S2
                    ┌──────▼──────────────┐
                    │  PERFORM GROUPING   │
                    └──────┬──────────────┘
                           │              ⌐S3
                    ┌──────▼──────────────────────┐
                    │ HAVE TRIAL OF CORRECTION     │
                    │ PROCESSING ON EACH PAIR OF   │
                    │ GROUPS                       │
                    └──────┬──────────────────────┘
                           │              ⌐S4
                    ┌──────▼──────────────────────┐
                    │ AGGREGATE RESULTS OF TRIALS  │
                    │ OF CORRECTION PROCESSING     │
                    │ WITH RESPECT TO EACH GROUP   │
                    └──────┬──────────────────────┘
                           │              ⌐S5
                    ┌──────▼──────────────┐
                    │ CALCULATE EXCESSES  │
                    └──────┬──────────────┘
                           │              ⌐S6
                    ┌──────▼──────────────────────┐
                    │ SPECIFY GROUP TO BE CORRECTED│
                    └──────┬──────────────────────┘
                           │              ⌐S7
                    ┌──────▼──────────────────────┐
                    │ SELECT INSTANCE TO BE MODIFIED│
                    └──────┬──────────────────────┘
                           │              ⌐S8
                    ┌──────▼──────────────┐
                    │   MODIFY INSTANCE   │
                    └──────┬──────────────┘
                           │              ⌐S9
                      ◇────▼────────────◇       NO
                      │ IS EXCESS WITHIN │──────┐
                      │ RANGE OF         │      │
                      │ ALLOWANCE?       │      │
                      ◇────┬────────────◇       │
                           │ YES                │
                    ┌──────▼──────┐             │
                    │     END     │             │
                    └─────────────┘             │
```

# FIG.12

| INSTANCE id | PROTECTED ATTRIBUTE | | NON-PROTECTED ATTRIBUTE | | | LABEL |
|---|---|---|---|---|---|---|
| | GENDER | RELIGION | AGE | ADDRESS | SCORE | |
| 1 | MALE | RELIGION A | 25 | TOKYO | 70 | PASSED |
| 2 | MALE | RELIGION B | 32 | TOKYO | 89 | FAILED |
| 3 | FEMALE | RELIGION A | 26 | CHIBA | 56 | PASSED |
| 4 | FEMALE | RELIGION B | 22 | TOKYO | 88 | FAILED |
| 5 | MALE | RELIGION A | 30 | KANAGAWA | 78 | FAILED |
| 6 | FEMALE | RELIGION B | 33 | KANAGAWA | 72 | PASSED |
| ... | ... | ... | ... | ... | ... | ... |

# FIG.13

MALE RELIGION A    MALE RELIGION B    FEMALE RELIGION A    FEMALE RELIGION B

FIG.14

EP 4 202 799 A1

# FIG.15

| MALE RELIGION A | MALE RELIGION B | FEMALE RELIGION A | FEMALE RELIGION B |

# FIG.16

| PAIR OF GROUPS | | FAIRNESS METRIC $\delta$ | EXCESS | | |
|---|---|---|---|---|---|
| PRIVILEGED GROUP | UNPRIVILEGED GROUP | | ATTRIBUTE-BASED | | SUB-TOTAL |
| MALE, RELIGION A | FEMALE, RELIGION A | -0.3 | GENDER | 0.1 | 0.1 |
| | | | - | 0 | |
| MALE, RELIGION A | FEMALE, RELIGION B | -0.4 | GENDER | 0.2 | 0.3 |
| | | | RELIGION | 0.1 | |
| MALE, RELIGION A | MALE, RELIGION B | -0.6 | RELIGION | 0.3 | 0.3 |
| | | | - | 0 | |
| FEMALE, RELIGION A | FEMALE, RELIGION B | -0.2 | RELIGION | 0 | 0 |
| | | | - | 0 | |
| FEMALE, RELIGION A | MALE, RELIGION B | -0.3 | GENDER | 0.1 | 0.1 |
| | | | RELIGION | 0 | |
| FEMALE, RELIGION B | MALE, RELIGION B | -0.1 | GENDER | 0 | 0 |
| | | | RELIGION | 0 | |

# FIG.17

| GROUP | EXCESS |
|---|---|
| MALE, RELIGION A | 0.7= \| 0.1+0.3+0.3 \| |
| MALE, RELIGION B | 0= \| 0.1+0+0.1\| |
| FEMALE, RELIGION A | 0.3= \| -0.3+0+0 \| |
| FEMALE, RELIGION B | 0.4= \| -0.3-0.1+0 \| |

# FIG.18

MALE
RELIGION A

MALE
RELIGION A

# FIG.19

MALE
RELIGION
A

MALE
RELIGION
B

FEMALE
RELIGION
A

FEMALE
RELIGION
B

# FIG.20

START

**S11**
EXECUTE CORRECTION PROCESSING USING FAIRNESS ALGORITHM ON ALL PAIRS OF GROUPS OF COMBINATIONS OF PROTECTED ATTRIBUTES

**S12**
AGGREGATE RESULTS OF CORRECTION PROCESSING WITH RESPECT TO EACH GROUP AND REGARD MODIFIED INSTANCES AS CANDIDATES TO BE MODIFIED

**S13**
CALCULATE ELEMENT METRICS OF ALL GROUPS AND DETERMINE PRIVILEGE OF ELEMENT GROUPS OF ALL PAIRS

**S14**
CALCULATE PAIR-BASED ATTRIBUTE-BASED EXCESSES AND PAIR-BASED EXCESSES FROM FAIRNESS METRICS OF ALL PAIRS

**S15**
CALCULATE GROUP-BASED EXCESSES FROM PAIR-BASED EXCESSES AND REGARD GROUP EXCEEDING 0 AS GROUP CANDIDATE TO BE CORRECTED

**S16** IS THERE GROUP CANDIDATE TO BE CORRECTED? — NO → END

YES

**S17**
REGARD GROUP WITH LARGEST EXCESS AMONG GROUP CANDIDATES TO BE CORRECTED AS GROUP TO BE CORRECTED

**S18** IS THERE INSTANCE SERVING AS CANDIDATE TO BE MODIFIED IN GROUP TO BE CORRECTED? — NO

YES

**S19**
CALCULATE CONFIDENCE WITH RESPECT TO EACH INSTANCE SERVING AS CANDIDATE TO BE MODIFIED AND SELECT INSTANCE WITH HIGHEST CONFIDENCE

**S20** DOES ORDER OF ELEMENT METRICS CHANGE WHEN SELECTED INSTANCE IS MODIFIED? — YES

NO

**S21**
REFLECT CONTENT OF MODIFICATION OF SELECTED INSTANCE TO GROUP-BASED AGGREGATION RESULT AND MAKE EXCLUSION FROM CANDIDATES TO BE MODIFIED

**S22**
MAKE EXCLUSION FROM GROUP CANDIDATE TO BE CORRECTED

FIG.21

START

EXECUTE CORRECTION PROCESSING USING FAIRNESS ALGORITHM ON ALL PAIRS OF GROUPS OF COMBINATIONS OF PROTECTED ATTRIBUTES —S31

AGGREGATE RESULTS OF CORRECTION PROCESSING WITH RESPECT TO EACH GROUP AND REGARD MODIFIED INSTANCES AS CANDIDATES TO BE CORRECTED —S32

CALCULATE ELEMENT METRICS OF ALL GROUPS AND DETERMINE PRIVILEGE OF ELEMENT GROUPS OF ALL PAIRS —S33

CALCULATE PAIR-BASED ATTRIBUTE-BASED EXCESSES AND PAIR-BASED EXCESSES FROM FAIRNESS METRICS OF ALL PAIRS —S34

CALCULATE GROUP-BASED EXCESSES FROM PAIR-BASED EXCESSES AND REGARD GROUP EXCEEDING 0 AS GROUP CANDIDATE TO BE CORRECTED —S35

IS THERE GROUP CANDIDATE TO BE CORRECTED? —S36 —— NO —— END

YES

ARE THERE GROUPS WITH LARGEST EXCESSES AMONG GROUP CANDIDATES TO BE CORRECTED? —S37 —— NO

YES

REGARD, AS GROUP TO BE CORRECTED, GROUP WITH HIGHEST NUMBER OF CANDIDATES TO BE CORRECTED OR HIGHEST CONFIDENCE AMONG GROUPS WITH LARGEST EXCESSES —S38

REGARD GROUP WITH LARGEST EXCESS AS GROUP TO BE CORRECTED —S39

IS THERE INSTANCE SERVING AS CANDIDATE TO BE MODIFIED IN GROUP TO BE CORRECTED? —S40 —— NO

YES

CALCULATE CONFIDENCE WITH RESPECT TO EACH INSTANCE SERVING AS CANDIDATE TO BE MODIFIED AND SELECT INSTANCE WITH HIGHEST CONFIDENCE —S41

DOES ORDER OF ELEMENT METRICS CHANGE WHEN SELECTED INSTANCE IS MODIFIED? —S42 —— YES

NO

REFLECT CONTENT OF MODIFICATION OF SELECTED INSTANCE TO GROUP-BASED AGGREGATION RESULT AND MAKE EXCLUSION FROM CANDIDATES TO BE MODIFIED —S44

MAKE EXCLUSION FROM GROUP CANDIDATE TO BE CORRECTED —S43

30

# FIG.22

DATA PREPARATION PHASE

TRAINING PHASE

CLASSIFICATION PHASE

TRAINING DATA

10

TRAIN-ING DEVICE

40

TRAINED MODEL

50A

CLASSIFI-CATION DEVICE

60A

CLASSIFI-CATION DATA

70

INFOR-MATION PROC-ESSING DEVICE

20A

CORRECTED CLASSIFICA-TION DATA

80

CLASSIFICATION DATA (WITHOUT CONSIDER-ATION OF FAIRNESS)

CORRECT UNFAIRNESS

CORRECTED CLASSI-FICATION DATA (WITH CONSIDERA-TION OF FAIRNESS)

EP 4 202 799 A1

# FIG.23

## INTERNATIONAL SEARCH REPORT

| International application No. |
| --- |
| PCT/JP2020/031769 |

| A. CLASSIFICATION OF SUBJECT MATTER |
| --- |
| Int. Cl. G06N20/00(2019.01)i |
| FI: G06N20/00 130 |
| |
| According to International Patent Classification (IPC) or to both national classification and IPC |

| B. FIELDS SEARCHED |
| --- |
| Minimum documentation searched (classification system followed by classification symbols) |
| Int. Cl. G06N20/00 |

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | CALMON, Flavio P. et al. Optimized Pre-Processing for Discrimination Prevention. Conference on Neural Information Processing Systems, 04 December 2017, pp. 2-5, pp. 2-5 | 1-15 |
| A | JP 2019-519021 A (HIREVUE INC.) 04 July 2019, paragraphs [0004]-[0051] | 1-15 |
| A | JP 2008-123043 A (SONY CORP.) 29 May 2008, paragraphs [0024]-[0166] | 1-15 |

☐ Further documents are listed in the continuation of Box C. ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 21.10.2020 | 02.11.2020 |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

Information on patent family members

| International application No. |
| --- |
| PCT/JP2020/031769 |

| Patent Documents referred to in the Report | Publication Date | Patent Family | Publication Date |
| --- | --- | --- | --- |
| JP 2019-519021 A | 04.07.2019 | US 2017/0293858 A1 paragraphs [0011]-[0060] WO 2017/180608 A1 paragraphs [0010]-[0058] | |
| JP 2008-123043 A | 29.05.2008 | (Family: none) | |

Form PCT/ISA/210 (patent family annex) (January 2015)

**EP 4 202 799 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019519021 A